# EUROPEAN PATENT APPLICATION

(11) **EP 4 741 327 A1**
(43) Date of publication of application: **13.05.2026**
(21) Application number: 25212913.5
(22) Date of filing: 03.11.2025
(51) Int. Cl.: B65H 3/06, B65H 3/52, B65H 7/04, B65H 7/14

(54) **DOCUMENT CONVEYING DEVICE, AND CORRESPONDING DOCUMENT CONVEYING AND READING APPARATUS**

(30) Priority: 07.11.2024 JP 2024195048
(71) Applicant: Kyocera Document Solutions Inc., Osaka-shi, Osaka 540-8585 (JP)
(72) Inventor: ISODA, Ren, Osaka-shi, 540-8585 (JP)
(74) Representative: Kurig, Thomas

(57) **Abstract**

A document conveying device (5) includes a sheet feeding tray (25), a sheet feeding unit (73), an actuator (91), a sensor (93), and a control part (501). The sheet feeding unit (73) includes a drive shaft (113), a holder (111), and a pickup roller (117). The actuator (91) includes a rotational shaft (101), a detecting piece (103), and a light-shielding piece (105). When a signal different from a signal outputted from the sensor (93) when the actuator (91) is driven with the document set on the sheet feeding tray (25) is input, the control part (501) returns the sheet feeding unit (73) to an initial posture in which the pickup roller (117) is separated upward from the sheet feeding tray (25).

## Description

### TECHNICAL FIELD

The present disclosure relates to a document conveying device including a sheet feeding unit, and a document conveying and reading apparatus including the document conveying device.

### BACKGROUND

A document conveying device includes a sheet feeding tray on which a document is set, a conveying frame having a conveying path along which the document is conveyed, a sheet feeding unit which feeds the document set on the sheet feeding tray to the conveying path, and a conveying cover which is provided so as to be turnable upward and downward relative to the conveying frame and exposes the conveying path by being turned upward.

The sheet feeding unit includes a drive shaft rotatably supported by the conveying cover, a holder rotatably supported by the drive shaft, and a pickup roller rotatably supported by the holder, as described JP2015-86010. The upstream end portion of the holder in the conveying direction is rotatably supported by the drive shaft. The pickup roller is rotatably supported at the downstream end portion of the holder in the conveying direction.

In a state where the conveying cover is closed, the drive gear fixed to the drive shaft is meshed with the output gear of the motor provided in the conveying frame. When the drive shaft is rotated by the motor, the holder is turned upward and downward to move the pickup roller up and down between a sheet feeding position where it abuts on the document set on the sheet feeding tray and a retracted position where it is separated upward from the document. When the sheet feeding operation is started, the sheet feeding unit returns to the initial posture in which the holder is turned upward and the pickup roller is moved up to the retracted position.

### SUMMARY

A document conveying device according to the present disclosure includes a sheet feeding tray, a sheet feeding unit, an actuator, a sensor, and a control part. On the sheet feeding tray, a document is set. The sheet feeding unit feeds the document set on the sheet feeding tray in a predetermined conveying direction. The actuator is activated by the document set on the sheet feeding tray. The sensor outputs a predetermined signal in response to an activation of the actuator. The control part receives the signal output from the sensor and controls the sheet feeding unit based on the signal. The sheet feeding unit includes a drive shaft, a holder, and a pickup roller. The drive shaft is rotatably supported above the sheet feeding tray. The holder whose upstream side end portion in the conveying direction is rotatably supported by the drive shaft, and the holder is turnable upward and downward together with the drive shaft. Thea pickup roller is rotatably supported at a downstream side end portion of the holder in the conveying direction and rotates in contact with the document set on the sheet feeding tray. The actuator includes a rotational shaft, a detecting piece, and a light-shielding piece. The rotational shaft is rotatably supported above the sheet feeding tray. The detecting piece is provided integrally with the rotational shaft, suspended from the rotational shaft by its own weight, and rotates the rotational shaft by being pushed by the document set on the sheet feeding tray. The light-shielding piece is provided integrally with the rotational shaft, suspended from the rotational shaft by its own weight, and switches an output of the sensor by the rotation of the rotational shaft. When a signal different from a signal outputted from the sensor when the actuator is driven with the document set on the sheet feeding tray is input, the control part returns the sheet feeding unit to an initial posture in which the pickup roller is separated upward from the sheet feeding tray.

A document conveying and reading apparatus according to the present disclosure includes an image reading device which reads an image of the document at a predetermined reading position, and the document conveying device which is turnably supported by the image reading device and conveys the document whose image is to be read by the image reading device to the reading position.

### BRIEF DESCRIPTION OF THE DRAWINGS

FIG. 1 is a perspective view showing a document conveying and reading apparatus according to one embodiment of the present disclosure.
FIG. 2 is a cross-sectional view showing the document conveying and reading apparatus according to the embodiment of the present disclosure.
FIG. 3 is a perspective view showing a conveying cover viewed from below, in the document conveying and reading apparatus according to the embodiment of the present disclosure.
FIG. 4 is a view showing a document detecting mechanism and a sheet feeding unit viewed from the right side, in the document conveying and reading apparatus according to the embodiment of the present disclosure.
FIG. 5 is a cross-sectional view showing the document detecting mechanism and the sheet feeding unit viewed from the front side, in the document conveying and reading apparatus according to the embodiment of the present disclosure.
FIG. 6 is a perspective view showing an actuator of the document detecting mechanism, in the document conveying and reading apparatus according to the embodiment of the present disclosure.
FIG. 7 is a perspective view showing the sheet feeding unit viewed from below, in the document conveying and reading apparatus according to the embodiment of the present disclosure.
FIG. 8 is a block diagram showing a control part of the document conveying and reading apparatus according to the embodiment of the present disclosure.
FIG. 9 is a perspective view showing a light shielding piece of the actuator according to a first modified example, in the document conveying and reading apparatus according to the embodiment of the present disclosure.
FIG. 10 is a perspective view showing the light shielding piece of the actuator according to a second modified example, in the document conveying and reading apparatus according to the embodiment of the present disclosure.

### DETAILED DESCRIPTION

Hereinafter, with reference to the drawings, a document conveying and reading apparatus according to one embodiment of the present disclosure will be described.

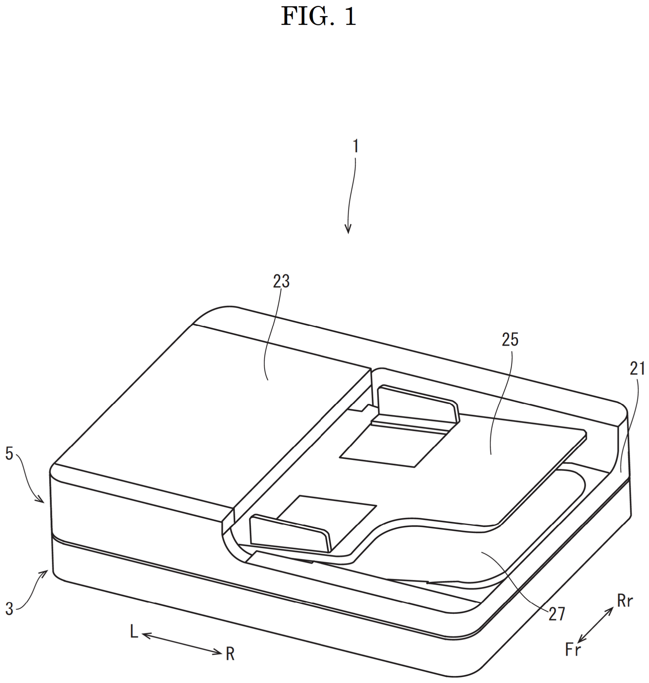

First, with reference to FIG. 1, the configuration of the document conveying and reading apparatus 1 will be described. FIG. 1 is a perspective view showing the document conveying and reading apparatus 1. Fr, Rr, L, R, Up, and Lo shown in each figure indicate the front, rear, left, right, upper, and lower of the document conveying and reading apparatus 1, respectively.

The document conveying and reading apparatus 1 includes an image reading device 3 and a document conveying device 5 arranged above the image reading device 3. The right and left rear corners of the lower surface of the document conveying device 5 are connected to the right and left rear corners of the upper surface of the image reading device 3 in a turnable manner upward and downward.

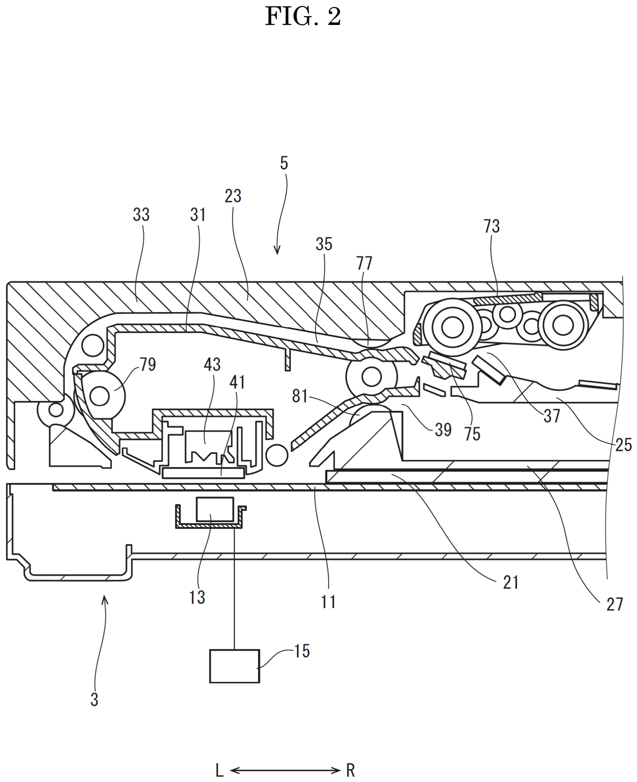

First, the image reading device 3 will be described with reference to FIG. 2. FIG. 2 is a cross-sectional view showing the document conveying and reading apparatus 1 (a part of it). The image reading device 3 includes a contact glass 11 on which a document is placed, a reading sensor 13 which reads an image of the document, and a sensor moving mechanism 15 which moves the reading sensor 13.

The contact glass 11 is fitted into the upper surface of the casing of the image reading device 3. By turning the document conveying device 5 upward relative to the image reading device 3, the contact glass 11 is exposed.

The reading sensor 13 is, for example, a CIS (contact image sensor). The reading sensor 13 is disposed below the contact glass 11 along the width direction (the front-and-rear direction) of the document.

The sensor moving mechanism 15 moves the reading sensor 13 to a plurality of positions including a reading position at which the image of the document conveyed by the document conveying device 5 can be read. The reading position is a position below the left end portion of the contact glass 11. When the document is conveyed to the reading position by the document conveying device 5, the reading sensor 13 reads the image of one side (the front side) of the document. Alternatively, when reading the image of the document placed on the contact glass, the sensor moving mechanism 15 moves the reading sensor 13 from the reading start position to the reading end position to read the image of the document placed on the contact glass 11.

Next, the document conveying device 5 will be described with reference to FIG. 1 and FIG. 2. The document conveying device 5 includes a base 21, a conveying part 23 provided on the upper left surface of the base 21, a sheet feeding tray 25 supported by the conveying part 23, and a discharge tray 27 provided on the upper right surface of the base 21. The document set on the sheet feeding tray 25 is conveyed through the conveying part 23, and after the image is read in the conveying part 23, the document is discharged to the discharge tray 27.

First, the base 21 will be described. The base 21 is a rectangular member elongated in the left- and-right direction, and a rear wall is stood along the rear edge. As shown in FIG. 2, an opening along the width direction of the document is formed at the left end portion of the base 21. The opening exposes the reading position of the image reading device 3.

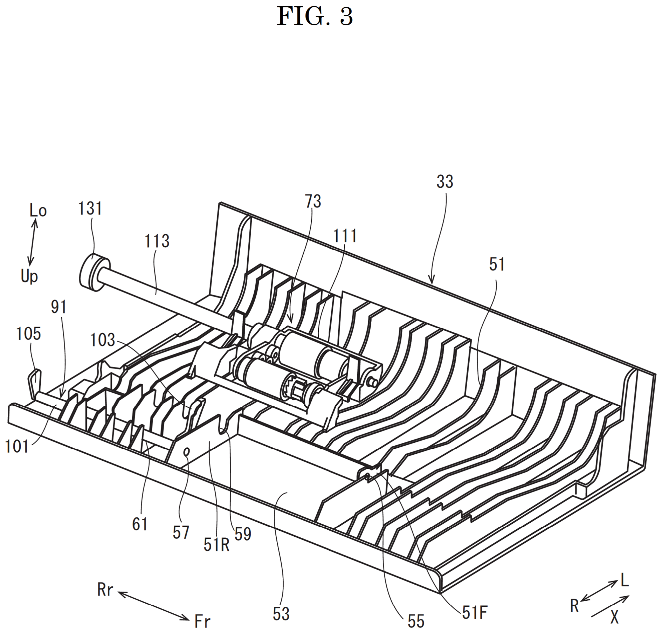

Next, the conveying part 23 will be described with reference to FIG. 2 and FIG. 3. FIG. 3 is a perspective view showing a conveying cover 33 viewed from below (partially omitted). As shown in FIG. 2, the conveying part 23 includes a conveying frame 31 fixed to the upper left surface of the base 21 and the conveying cover 33 turnably supported by the base 21.

The conveying part 23 includes a conveying path 35 along which the document is conveyed. The conveying path 35 is formed in a horizontal U-shape having a downward curved portion from a sheet feeding port 37 formed between the conveying cover 33 and the conveying frame 31 turned downward to a sheet discharge port 39 formed between the conveying frame 31 and the base 21. The direction in which the document is conveyed along the conveying path 35 is defined as a conveying direction X. The upstream side and the downstream side in the following description refer to the upstream side and the downstream side in the conveying direction X. More specifically, the upstream conveying path from the sheet feeding port 37 to the substantially center of the curved portion is formed along the upper surface of the conveying frame 31, and the downstream conveying path from the substantially center of the curved portion to the sheet discharge port 39 is formed along the upper surface of the base 21. By turning (opening) the conveying cover 33 upward, the upstream conveying path is exposed.

The conveying frame 31 will be described. The conveying frame 31 includes a transparent glass plate 41 facing the opening formed in the base 21. A reading sensor 43 is provided above the glass plate 41 along the width direction of the document. The reading sensor 43 is, for example, a CIS (contact image sensor). When the document is conveyed below the glass plate 41 through the downstream conveying path, the image of one side (the rear side) of the document is read by the reading sensor 43. Alternatively, the images on both sides of the document are read by the reading sensor 43 and the reading sensor 13 of the image reading device 3.

The conveying cover 33 will be described. The conveying cover 33 is supported on the left end portion of the upper surface of the base 21 in a turnable manner upward and downward around a rotational shaft parallel to the front-and-rear direction. As shown in FIG. 3, a plurality of ribs 51 along the conveying direction X are formed in a document conveying region on the inner surface of the conveying cover 33. Further, on the inner surface of the conveying cover 33, a recess 53 is formed at the central portion in the front-and-rear direction, which is partitioned by the front and rear side ribs 51F and 51R. The front side rib 51F has a downstream side opening 55, and the rear side rib 51R has an upstream side opening 57 on the upstream side of the downstream side opening 55. The ribs 51 on the rear side of the recess 53 are formed with downstream side notches 59 aligned with the downstream side opening 55 in the front-and-rear direction, and upstream side notches 61 aligned with the upstream side opening 57 in the front-and-rear direction.

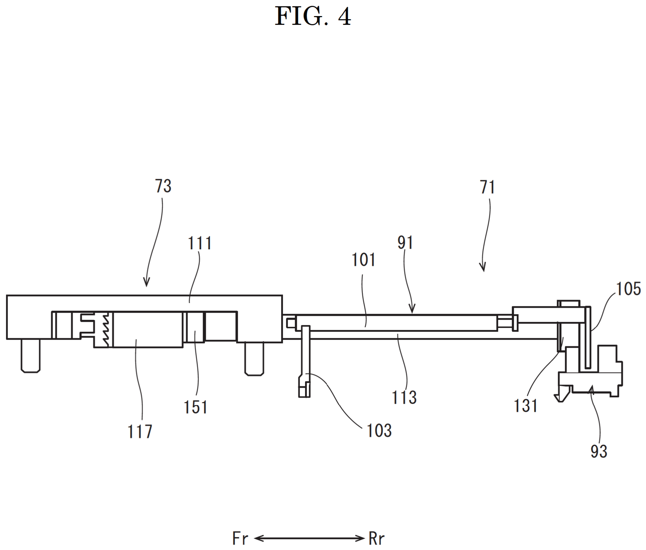

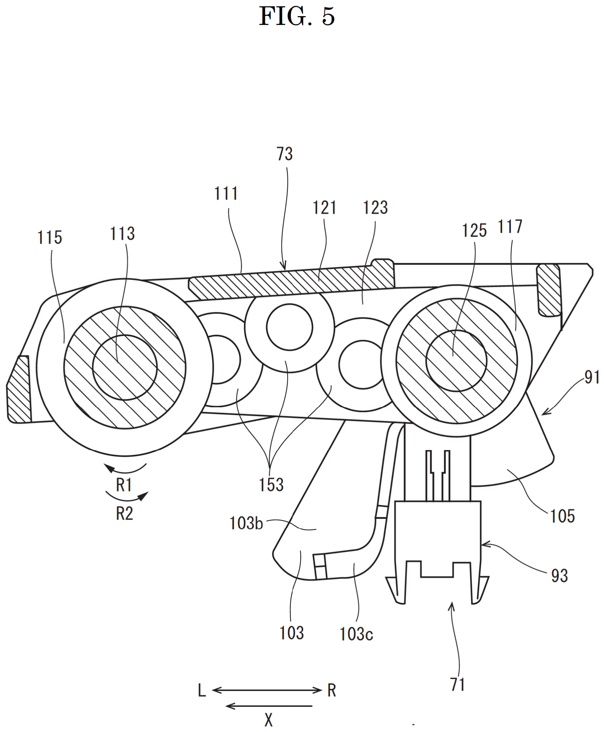

As shown in FIG. 2, on the conveying path 35, in order from the upstream side, a document detecting mechanism 71 (not shown in FIG. 2, see FIG. 4 and FIG. 5), a sheet feeding unit 73, a separation pad 75, a first pair of conveying rollers 77, a second pair of conveying rollers 79, and a pair of discharge rollers 81 are provided.

First, the document detecting mechanism 71 will be described with reference to FIG. 4 and FIG. 5. FIG. 4 is a view showing the document detecting mechanism 71 and the sheet feeding unit 73 viewed from the upstream side (the right side), and FIG. 5 is a cross-sectional view showing the document detecting mechanism 71 and the sheet feeding unit 73 viewed from the front side. The document detecting mechanism 71 detects that the document is set on the sheet feeding tray 25. The document detecting mechanism 71 includes an actuator 91 driven by the document set on the sheet feeding tray 25, and a sensor 93 which outputs a predetermined signal in response to the actuation of the actuator 91.

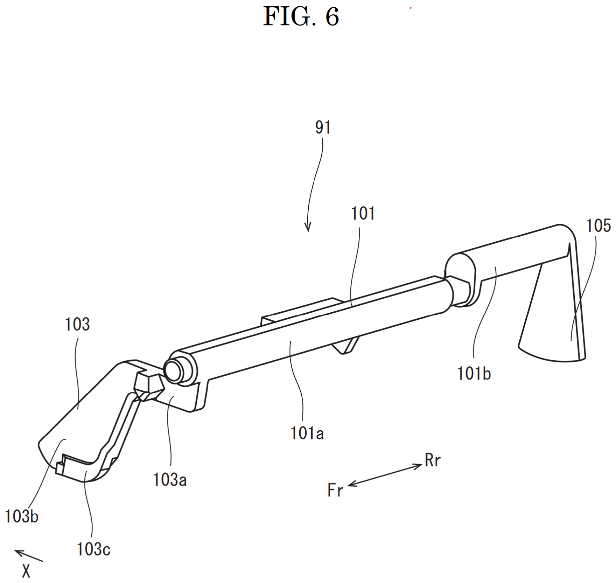

First, the actuator 91 will be described with reference to FIG. 6. FIG. 6 is a perspective view showing the actuator 91. The actuator 91 has a rotational shaft 101, and a detecting piece 103 and a light-shielding piece 105 provided at both ends of the rotational shaft 101. The rotational shaft 101 has a length approximately half the length of the document conveying region, and has a large-diameter shaft portion 101a and a small-diameter shaft portion 101b. The axis of the large-diameter shaft portion 101a and the axis of the small-diameter shaft portion 101b are parallel to each other and deviated in a direction intersecting the axial direction.

The detecting piece 103 projects from the end portion of the large-diameter shaft portion 101a in a direction orthogonal to the axial direction of the large-diameter shaft portion 101a. The detecting piece 103 is substantially L-shaped as viewed from the axial direction of the large-diameter shaft portion 101a, and has a connecting portion 103a and a detecting portion 103b. The connecting portion 103a extends downstream along the tangential direction on the outer surface of the large-diameter shaft portion 101a. The detecting portion 103b is provided at the tip of the connecting portion 103a and has a fan-shape when viewed from the axis direction of the large-diameter shaft portion 101a. A rib 103c is formed along the outer peripheral edge (the edge along the upstream side) on the outer surface of the detecting portion 103b. The light-shielding piece 105 projects from the end portion of the small-diameter shaft portion 101b in a direction orthogonal to the axial direction of the small-diameter shaft portion 101b. The light-shielding piece 105 has a fan-shape when viewed from the axial direction of the small-diameter shaft portion 101b. The light-shielding piece 105 and the detecting piece 103 are slightly separated in the circumferential direction of the rotational shaft 101.

The actuator 91 is supported on the inner surface of the conveying cover 33. More specifically, as shown in FIG. 3, the rotational shaft 101 of the actuator 91 is accommodated in the upstream side notches 61 of the ribs 51, and the tip of the rotational shaft 101 is inserted into the upstream side opening 57 of the rib 51R. The detecting piece 103 is positioned on the rear side of the recess 53, and the light-shielding piece 105 is positioned on the rear side of the document conveying region. It is preferable that no load is applied to the actuator 91 by a spring or the like. If a load is applied, the magnitude of the load is preferably as small as possible.

When the conveying cover 33 is closed, the detecting piece 103 and the light-shielding piece 105 hang down from the rotational shaft 101 by their own weight. As described above, since the light-shielding piece 105 and the detecting piece 103 are slightly separated in the circumferential direction of the rotational shaft 101, the detecting piece 103 is inclined downstream from the rotational shaft 101 (not shown in FIG. 5), and the light-shielding piece 105 is inclined upstream from the rotational shaft 101, depending on the weight balance between the detecting piece 103 and the light-shielding piece 105, as shown in FIG. 5. As a result, the downstream side edge of the light-shielding piece 105 is substantially vertical.

Next, the sensor 93 will be described. The sensor 93 is an optical sensor having a light emitting part and a light receiving part. The sensor 93 outputs an ON signal when the optical path formed between the light emitting part and the light receiving part is shielded, and outputs an OFF signal when the optical path is formed.

The sensor 93 is supported on the rear wall of the base 21 in a posture in which the optical path is parallel to the rotational shaft 101 of the actuator 91. Further, as shown in FIG. 4, the sensor 93 is positioned relative to the actuator 91 such that the light-shielding piece 105 of the actuator 91 crosses the optical path when the conveying cover 33 is closed.

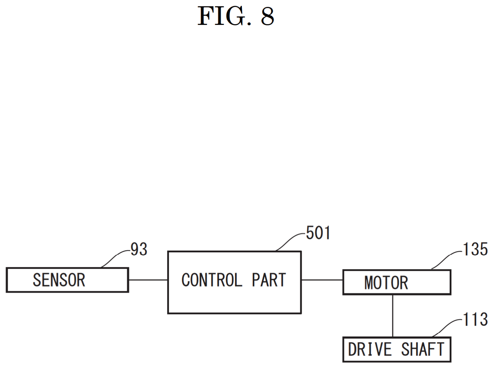

In a state where the conveying cover 33 is closed, and the detecting piece 103 and the light-shielding piece 105 of the actuator 91 are suspended from the rotational shaft 101 by their own weight (see FIG. 5), the light-shielding piece 105 is located on the upstream side of the optical path, and the sensor 93 outputs the OFF signal. When the detecting piece 103 is pressed by the document, the rotational shaft 101 (not shown in FIG. 5) rotates in the clockwise direction of FIG. 5, and the light-shielding piece 105 is turned in the clockwise direction of FIG. 5 together with the rotational shaft 101. Then, the optical path is shielded by the light-shielding piece 105, and the sensor 93 outputs the ON signal. The signal output from the sensor 93 is input to a control part 501 (see FIG. 8).

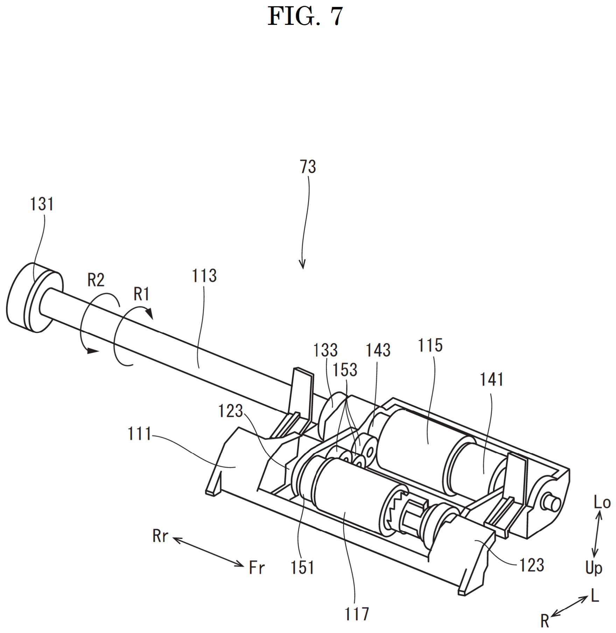

Next, the sheet feeding unit 73 will be described with reference to FIG. 3 to FIG. 5 and FIG. 7. FIG. 7 is a perspective view showing the sheet feeding unit 73 viewed from below. As shown in FIG. 7, the sheet feeding unit 73 includes a holder 111, a drive shaft 113 rotatably supported by the conveying cover 33 and by which the holder 111 is supported, a sheet feed roller 115 supported by the drive shaft 113, and a pickup roller 117 supported by the holder 111.

First, the holder 111 will be described. As shown in FIG. 5, the holder 111 has an upper plate 121 and front and rear side plates 123 opposed to each other in the front-and-rear direction, and has a box-like shape with the lower surface opened. Downstream-side shaft holes are coaxially formed at the downstream end portions of the front and rear side plates 123. A pickup roller shaft 125 is fixed between the upstream end portions of the front and rear side plates 123.

Next, the drive shaft 113 will be described. The drive shaft 113 has a length slightly longer than half the width of the document conveying region. As shown in FIG. 7, a drive gear 131 is fixed to the rear end of the drive shaft 113. The front end of the drive shaft 113 penetrates through the downstream shaft holes of the front and rear side plates 123 of the holder 111. Thus, the holder 111 can be turned upward and downward around the drive shaft 113. A torque limiter 133 is provided between the rear side plate 123 of the holder 111 and the drive shaft 113. In a state where the turning of the holder 111 is not restricted, the torque limiter 133 transmits the rotation of the drive shaft 113 to the holder 111 to turn the holder 111 together with the drive shaft 113. On the other hand, in a state where the turning of the holder 111 is restricted, the drive shaft 113 is idled relative to the holder 111.

The torque limiter 133 includes a collar (not shown) which is externally fitted around the drive shaft 113 and rotates integrally with the drive shaft 113, and a coil spring (not shown) supported by the collar. The coil spring is wrapped around the collar by elastic force. The coil spring rotates integrally with the collar by the wrapping force of the coil spring. On the other hand, when the wrapping force of the coil spring with respect to the collar is loosened, the collar is idled with respect to the coil spring. One end portion of the coil spring is curved in the radial direction of the collar and protrudes more outward than the large diameter portion of the collar. By rotating the coil spring in the forward and reverse directions, one end portion can be engaged with the forward and reverse engagement portions (not shown) of the holder 111.

When the drive shaft 113 rotates in the forward direction R1 (the clockwise direction of FIG. 5, the clockwise direction of FIG. 7), the coil spring rotates together with the collar by the wrapping force. When one end portion of the coil spring is engaged with the forward engagement portion of the holder 111, the rotating force of the collar, that is the drive shaft 113 is transmitted to the holder 111, and the holder 111 is turned downward around the drive shaft 113. When the downward turning of the holder 111 is restricted, the wrapping force of the coil spring is loosened, and the collar idles with respect to the coil spring. On the other hand, when the drive shaft 113 rotates in the reverse direction R2 (the counterclockwise direction of FIG. 5, the counterclockwise direction of FIG. 7), the coil spring rotates together with the collar by the wrapping force. When one end portion of the coil spring is engaged with the reverse engagement portion of the holder 111, the rotating force of the collar, that is the drive shaft 113 is transmitted to the holder 111, and the holder 111 is turned upward around the drive shaft 113. When the upward turning of the holder 111 is restricted, the collar idles with respect to the collar. At this time, since the wrapping force of the coil spring is increased, the collar slides with respect to the coil spring. As a result, a load due to friction between the coil spring and the collar is applied to the drive shaft 113 which rotates together with the collar.

Next, the sheet feed roller 115 will be described. As shown in FIG. 7, the sheet feed roller 115 is supported by the drive shaft 113 via a one-way clutch 141. The one-way clutch 141 transmits the rotation of the drive shaft 113 to the sheet feed roller 115 when the sheet feed roller 115 rotates in the forward direction R1 (the clockwise direction in FIG. 7). An output gear 143 is coaxially fixed on the rear end surface of the sheet feed roller 115.

Next, the pickup roller 117 will be described. The pickup roller 117 is integrally supported by the pickup roller shaft 125 (see FIG. 5) fixed to the holder 111. As shown in FIG. 7, an input gear 151 is coaxially fixed on the rear end surface of the pickup roller 117. The input gear 151 and the output gear 143 of the sheet feed roller 115 mesh with each other via three idle gears 153 rotatably supported on the inner surface of the rear side plate 123 of the holder 111. Thus, the rotation of the sheet feed roller 115 is transmitted to the pickup roller 117, and the sheet feed roller 115 and the pickup roller 117 rotate in the same direction.

As shown in FIG. 3, the holder 111 of the sheet feeding unit 73 is accommodated in the recess 53 of the conveying cover 33. The drive shaft 113 is accommodated in the downstream side notches 59 of the ribs 51, and the tip of the drive shaft 113 is inserted into the downstream side opening 55 of the rib 51F via a bearing member. A drive gear 131 fixed to the rear end of the drive shaft 113 is positioned on the rear side of the document conveying region. When the conveying cover 33 is closed, the drive gear 131 is meshed with the output gear of the motor 135 (see FIG. 8) supported by the rear wall of the base 21. When the motor 135 is driven, the drive shaft 113 rotates in the forward direction R1 or the reverse direction R2 through the output gear and the drive gear 131. The motor 135 is electrically connected to the control part 501 (see FIG. 8).

Next, the separation pad 75 will be described with reference to FIG. 2. The separation pad 75 is supported by the conveying frame 31, and abuts against the sheet feed roller 115 with elastic force from below. A separation nip is formed between the separation pad 75 and the sheet feed roller 115.

Next, the first pair of conveying rollers 77, the second pair of conveying rollers 79, and the pair of discharge rollers 81 will be described with reference to FIG. 2. The first pair of conveying rollers 77 is arranged on the downstream side of the separation nip, and includes a drive roller and a driven roller arranged across the conveying path 35. The second pair of conveying rollers 79 is arranged at the curved portion of the conveying path 35, and includes a drive roller and a driven roller arranged across the conveying path 35. The pair of discharge rollers 81 is arranged inside the discharge port 39, and includes a drive roller and a driven roller arranged across the conveying path 35. The drive roller of the pair of discharge rollers 81 doubles as the drive roller of the first pair of conveying rollers 77.

Next, the sheet feeding tray 25 will be described with reference to FIG. 1 and FIG. 2. The sheet feeding tray 25 is formed in a rectangular plate shape having a fixed end fixed to the conveying part 23 and a free end opposite to the fixed end. The sheet feeding tray 25 is supported by the conveying frame 31 below the sheet feeding port 37 in a downward inclined posture from the free end toward the fixed end.

Next, the discharge tray 27 will be described with reference to FIG. 1 and FIG. 2. The discharge tray 27 is formed on the right upper surface of the base 21 below the discharge port 39.

Next, the control part 501 will be described with reference to FIG. 8. FIG. 8 is a block diagram showing the control part 501. The control part 501 receives the ON signal or the OFF signal from the sensor 93 of the document detecting mechanism 71. Further, the control part 501 is electrically connected to the motor 135 for driving the drive shaft 113 of the sheet feeding unit 73 to rotate the drive shaft 113 in the forward or reverse direction.

A sheet feeding operation of the document conveying device 5 having the above configuration will be described with reference mainly to FIG. 5 and FIG. 7. In the standby state, the actuator 91 of the document detecting mechanism 71 is maintained in the initial posture in which the detecting piece 103 and the light-shielding piece 105 are suspended from the rotational shaft 101 by their own weight. Since the optical path of the sensor 93 is not shielded by the light-shielding piece 105, the sensor 93 outputs the OFF signal to the control part 501. The sheet feeding unit 73 is maintained in the initial posture in which the holder 111 is turned upward and the pickup roller 117 is moved up to a retracted position where it is separated the sheet feeding tray 25 upward. As shown in FIG. 5, the detecting piece 103 of the actuator 91 of the document detecting mechanism 71 is located on the downstream side of the pickup roller 117.

When the document is set on the sheet feeding tray 25 through the gap between the pickup roller 117 and the sheet feeding tray 25, the tip of the document pushes the detecting piece 103 of the actuator 91, and the rotational shaft 101 rotates in the clockwise direction. Then, the light-shielding piece 105 rotates in the clockwise direction together with the rotational shaft 101. As a result, the light-shielding piece 105 shields the optical path, and the sensor 93 outputs the ON signal.

When the ON signal is input from the sensor 93, the control part 501 drives the motor 135 so as to rotate the drive shaft 113 of the sheet feeding unit 73 in the forward direction R1 (the clockwise direction in FIG. 5). The rotational force of the drive shaft 113 in the forward direction R1 is transmitted to the holder 111 through the torque limiter 133, and the holder 111 turns together with the drive shaft 113 by the action of the torque limiter 133. As a result, the holder 111 turns downward around the drive shaft 113, and the pickup roller 117 is moved down to a sheet feed position where it is contact with the upper surface of the uppermost document set on the sheet feeding tray 25. After the pickup roller 117 is in contact with the document, the wrapping force of the coil spring of the torque limiter 133 relative to the drive shaft 113 is loosened, so that the drive shaft 113 idles with respect to the coil spring.

Further, the rotation of the drive shaft 113 is transmitted to the sheet feed roller 115 via the one-way clutch 141, and the sheet feed roller 115 rotates in the forward direction. The rotation of the sheet feed roller 115 is transmitted to the pickup roller 117 through the output gear 143, the idle gears 153, and the input gear 151. As a result, the pickup roller 117 rotates in the forward direction, and the uppermost document is fed in the conveying direction. The fed documents are separated one by one at the separation nip.

Thereafter, the document is conveyed along the conveying path 35 by the first pair of conveying rollers 77 and the second pair of conveying rollers 79, and the image on one side is read by the reading sensor 43 at the reading position. Alternatively, the images on both sides of the document are read by the reading sensor 43 and the reading sensor 13 of the image reading device 3. Thereafter, the sheet is discharged through the discharge port 39 by the pair of discharge rollers 81 through the conveying path 35. The documents discharged through the discharge port 39 are loaded on the discharge tray 27.

When the last document of the documents set on the sheet feeding tray 25 is fed, the detecting piece 103 of the actuator 91 is separated from the document, so that the rotational shaft 101 is rotated by its own weight and the actuator 91 returns to the initial posture. Then, the light-shielding piece 105 is separated from the optical path, and the sensor 93 outputs the OFF signal to the control part 501. The sensor 93 continues to output the ON signal from the time the document is set until the time the last document is fed. For example, when the conveying speed of the document is 210 mm/s, the output time of the ON signal is 1 second from the time one document of A4 width size is set until the time the document is fed.

When the OFF signal is input from the sensor 93, the control part 501 controls the motor 135 so as to rotate the drive shaft 113 of the sheet feeding unit 73 in the reverse direction R2 (the counterclockwise direction in FIG. 5). The rotational force of the drive shaft 113 in the reverse direction R2 is transmitted to the holder 111 through the torque limiter 133, and the holder 111 is turned upward around the drive shaft 113 by the action of the torque limiter 133, and the pickup roller 117 is moved upward. Eventually, the holder 111 comes into contact with the conveying cover 33 to restrict the turning. When the turning of the holder 111 is restricted, the collar of the torque limiter 133 idles with respect to the coil spring. At this time, since the wrapping force of the coil spring is increased, the collar slides with respect to the coil spring. As a result, a load due to friction between the coil spring and the collar is applied to the drive shaft 113 which rotates integrally with the collar, and the load applied from the motor 135 to the drive shaft 113 varies. That is, the load increases, and the motor current increases. The control part 501 stops the rotation of the motor 135 when the increase of the motor current is detected.

In this manner, after the sheet feeding operation is completed, the sheet feeding unit 73 returns to the initial posture. Further, it can be said that the rotation of the drive shaft 113 is regulated by the meshing of the drive gear 131 with the output gear of the motor 135, and the sheet feeding unit 73 is maintained at the initial posture.

However, when the conveying cover 33 is opened in the state where the sheet feeding unit 73 is returned to the initial attitude, the drive gear 131 is separated from the output gear of the motor 135. As a result, the rotation of the drive shaft 113 becomes free, the sheet feeding unit 73 cannot be maintained in the initial posture, and the holder 111 is turned downward. If the conveying cover 33 is closed in this state, the pickup roller 117 interferes with the document to be set.

On the other hand, when the opened conveying cover 33 is closed, the impact applied to the conveying cover 33 is transmitted to the actuator 91 supported on the inner surface of the conveying cover 33, and the rotational shaft 101 of the actuator 91 rotates and reciprocates within a predetermined rotation angle. Even after the conveying cover 33 is closed, the rotational shaft 101 continues to rotate and reciprocate by inertia. Then, the light-shielding piece 105 provided integrally with the rotational shaft 101 also reciprocates across the optical path of the sensor 93. Thus, the optical path is formed and shielded in a short time, and the ON signal and the OFF signal output from the sensor 93 are switched in a short time. The output time of the ON signal when the conveying cover 33 is closed is considerably shorter than the output time of the ON signal during the period from the time the document is set until the tile the last document is fed, that is, during the sheet feeding operation. Based on the output time of the ON signal, the control part 501 can determine whether the sheet feeding operation is being executed or not, in other words, whether the conveying cover 33 is closed or not. That is, if the output time of the ON signal is a predetermined time or longer (for example, 200 ms or longer), it can be determined that the sheet feeding operation is being executed. On the other hand, when the output time of the ON signal is shorter than the predetermined time (for example, 100 ms or less) or the ON signal and the OFF signal are switched in a short time, it can be determined that the conveying cover 33 is closed.

When it is determined that the conveying cover 33 is closed, the control part 501 controls the motor 135 so as to rotate the drive shaft 113 in the reverse direction R2 to turn the holder 111 upward. When the holder 111 is turned to move the pickup roller 117 upward and the rotation of the holder 111 is regulated by the conveying cover 33, the control part 501 stops the rotation of the motor 135. Thus, the sheet feeding unit 73 returns to the initial posture.

As is clear from the above description, the sheet feeding unit 73 can be returned to the initial posture by closing the conveying cover 33 after opening it during the sheet jam treatment or the like. More specifically, the actuator 91 of the document detecting mechanism 71 reciprocates and rotates due to the impact generated when closing the conveying cover 33. By detecting the rotation of the actuator 91, it is determined that the conveying cover 33 is closed, and the sheet feeding unit 73 is returned to the initial posture. Therefore, since the pickup roller 117 does not interfere with the document to be set, the sheet feeding operation can be performed normally.

In particular, the actuator 91 is supported by the conveying cover 33. The rotational shaft 101 of the actuator 91 is parallel to the rotational shaft of the conveying cover 33. Therefore, since the actuator 91 itself moves when the conveying cover 33 is closed, the actuator 91 largely rotates. Therefore, the rotation of the actuator 91 can be reliably detected.

Generally, the document conveying device 5 is provided with an opening/closing detection sensor for detecting the opening/closing of the conveying cover 33. When the opening/closing detection sensor detects that the conveying cover 33 is closed, the sheet feeding unit 73 is returned to the initial posture. In the present embodiment, the sheet feeding unit 73 can be automatically returned to the initial posture when the conveying cover 33 is closed without providing such an opening/closing detection sensor. Therefore, since the opening/closing detection sensor is unnecessary, the number of parts and the cost can be reduced, and the control and configuration of the document conveying device 5 can be simplified.

When the image of the document is read by the document fixing method, the document conveying device 5 is turned upward to expose the contact glass 11 of the image reading device 3, and then the document is placed on the contact glass 11, and then the document conveying device 5 is turned downward to press the document. When the document conveying device 5 is turned downward, the impact is applied to the document conveying device 5.

In this case as well, when the control part 501 detects the rotation of the actuator 91, it controls the motor 135 so as to return the sheet feeding unit 73 to the initial posture. Therefore, even when the impact is applied to the sheet feeding unit 73 when the document conveying device 5 is closed, and the torque limiter 133 is idled relative to the drive shaft 113 to move the sheet feeding unit 73 downward, the sheet feeding unit 73 can be returned to the initial posture. It is also possible to return the sheet feeding unit 73 to the initial posture by detecting that the document conveying device 5 is closed (turned downward) by an opening/closing detection sensor for detecting the opening/closing of the document conveying device 5. In the present embodiment, since it is not necessary to provide such an opening/closing detection sensor, the number of parts and the cost can be reduced, and the control and configuration of the document conveying and reading apparatus 1 can be simplified.

Furthermore, when the work of aligning the document by aligning the edge of the document on the conveying cover 33 of the document conveying device 5 is performed, the control part 501 also controls the motor 135 so as to return the sheet feeding unit 73 to the initial posture when the rotation of the actuator 91 is detected.

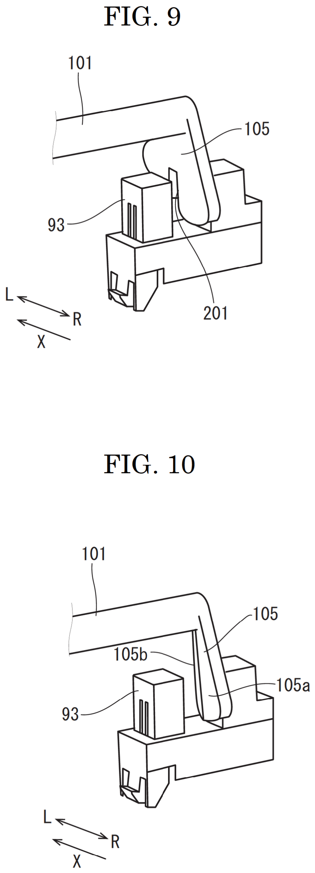

Next, with reference to FIG. 9 and FIG. 10, modified examples of the light-shielding piece 105 of the actuator 91 will be described. FIG. 9 and FIG. 10 are perspective views showing the light-shielding piece 105 of the actuator 91.

In the first modified example shown in FIG. 9, a slit 201 through which the optical path penetrates is formed in the light-shielding piece 105. The slit 201 is formed along a direction orthogonal to the rotational shaft 101. A width of the slit 201 is slightly wider than a width of the optical path. A shape and size of the portion on the upstream side of the slit 201 and the portion on the downstream side of the slit are substantially equal.

In the initial posture, since the optical path is formed through the slit 201, the sensor 93 outputs the OFF signal. When the sheet feeding operation is executed, the optical path is blocked at the downstream side portion of the light-shielding piece 105, and the sensor 93 outputs the ON signal. When the rotational shaft 101 is reciprocated and rotated by the impact applied to the conveying cover 33, the downstream side portion and the upstream side portion alternately shields the optical path. Since the width of the slit 201 is relatively narrow, the time for forming the optical path is shortened, and the output time during the ON signal is being output is shortened. Therefore, since the difference in the output time of the ON signal is large between the sheet feeding operation and the case where the impact is applied, it can be easily estimated that the impact is applied.

In the second modified example shown in FIG. 10, the light-shielding piece 105 has a fan-shape centered on the rotational shaft, and has an upstream side light-shielding portion 105a and a downstream side transparent portion 105b on both sides of a line orthogonal to the rotational shaft 101. The light-shielding portion 105a is made of material capable of shielding the optical path, and the transparent portion 105b is made of material capable of transmitting the optical path.

In the second modified example, the downstream side edge of the light-shielding portion 105a can be brought close to the optical path with the light-shielding piece 105 hanging substantially in the vertical direction from the rotational shaft 101. Therefore, even when the rotation angle of the rotational shaft 101 is small, the optical path is quickly shielded by the light-shielding portion 105a. Therefore, the impact can be detected quickly and surely.

In the above-described embodiment, in order to bring the downstream side edge of the light-shielding piece 105 close to the optical path, the light-shielding piece 105 and the detecting piece 103 are separated away in the circumferential direction of the rotational shaft 101 in consideration of the balance of weights of the light-shielding piece and the detecting piece. However, in the second modified example, both pieces 103 and 105 are formed at substantially the same positions in the circumferential direction of the rotational shaft 101, and both pieces 103 and 105 can be made to hang substantially vertically. Therefore, the actuator 91 can be stably supported.

## Claims

1. A document conveying device (5) comprising:
a sheet feeding tray (25) on which a document is set;
a sheet feeding unit (73) which feeds the document set on the sheet feeding tray (25) in a predetermined conveying direction;
an actuator (91) activated by the document set on the sheet feeding tray (25);
a sensor (93) which outputs a predetermined signal in response to an activation of the actuator (91); and
a control part (501) which receives the signal output from the sensor (93) and controls the sheet feeding unit (73) based on the signal, wherein
the sheet feeding unit (73) includes:
a drive shaft (113) rotatably supported above the sheet feeding tray (25);
a holder (111) whose upstream side end portion in the conveying direction is rotatably supported by the drive shaft (113) and is turnable upward and downward together with the drive shaft (113); and
a pickup roller (117) which is rotatably supported at a downstream side end portion of the holder (111) in the conveying direction and rotates in contact with the document set on the sheet feeding tray (25),
the actuator (91) includes:
a rotational shaft (101) rotatably supported above the sheet feeding tray 825);
a detecting piece (103) which is provided integrally with the rotational shaft (101), suspended from the rotational shaft (101) by its own weight, and rotates the rotational shaft (101) by being pushed by the document set on the sheet feeding tray (25); and
a light-shielding piece (105) which is provided integrally with the rotational shaft (101), suspended from the rotational shaft (101) by its own weight, and switches an output of the sensor (93) by the rotation of the rotational shaft (101),
**characterized in that**
when a signal different from a signal outputted from the sensor (93) when the actuator (91) is driven with the document set on the sheet feeding tray (25) is input, the control part (105) returns the sheet feeding unit (73) to an initial posture in which the pickup roller (117) is separated upward from the sheet feeding tray (25).

2. The document conveying device (5) according to claim 1, comprising:
a conveying frame (31) having a conveying path (35) along which the document set on the sheet feeding tray (25) is conveyed, and
a conveying cover (33) which is turnably provided upward and downward, and exposes the conveying path (35) by being turned upward, wherein
the sheet feeding unit (73) and the actuator (91) are supported by the conveying cover 833).

3. The document conveying device (5) according to claim 1, wherein
when the signal shorter than the signal outputted from the sensor (93) when the actuator (91) is driven with the document set on the sheet feeding tray (25) is input, the control part (501) returns the sheet feeding unit (73) to the initial posture.

4. The document conveying device (5) according to claim 2, wherein
a rotational shaft of the conveying cover (33) and the rotational shaft (101) of the actuator (91) are parallel.

5. A document conveying and reading apparatus (1), comprising:
an image reading device (3) which reads an image of the document at a predetermined reading position, and
the document conveying device (5) according to claim 1, which is turnably supported by the image reading device (3) and conveys the document whose image is to be read by the image reading device (3) to the reading position.
